# EUROPEAN PATENT APPLICATION

(11) **EP 4 749 117 A1**
(43) Date of publication of application: **27.05.2026**
(21) Application number: 24306941.6
(22) Date of filing: 21.11.2024
(51) Int. Cl.: F02K 1/72, F02K 1/76

(54) **LOCK SYSTEM**

(71) Applicant: Rohr, Inc., Chula Vista, CA 91910 (US)
(72) Inventor: TREZIERES, Marlene Marcelle Simone, Cornebarrieu 31700 (FR); BUCHET, Damien, Toulouse 31500 (FR); SERRE, Robinson, Toulouse 31200 (FR)
(74) Representative: Dehns

(57) **Abstract**

A lock system (100; 200; 300; 400; 500) is provided including a blade (102; 302; 402), a blade stop (104; 404), a blade actuating member (106; 306; 406), a sensor (110), a controller (120) and an electric motor (108). The blade (102; 302; 402) is retracted past where the blade stop (104; 404) contacts an end of the blade actuating member (106; 306; 406) when the blade (102; 302; 402) is fractured and translated in the direction of a retracted unlocked position from an extended locked position. The sensor (110) can send a signal to the controller (120) based on the position of the blade (102; 302; 402). The controller (120 can determine when the signal from the sensor (110) indicates that the blade (102; 302; 402) has retracted past the point where the blade stop (104; 404) contacts the end of the blade actuating member (106; 306; 406).

## Description

### Technical Field

The present disclosure relates generally to a lock system and in particular to the fracture detection of a tertiary lock system for thrust reverser components used in an aircraft (e.g. translating thrust reverser cowls).

### Background

An aircraft may include a thrust reverser system. This system alters the thrust output of the engine to act against the forward travel of the aircraft, allowing the aircraft to decelerate quicker.

Most thrust reverser systems include multiple lock systems coupled to different parts of the system. A "tertiary" lock system is typically coupled to a translating cowl of the thrust reverser system. A tertiary lock system may comprise a blade configured to be placed into an extended locked position to prevent the movement of a component such that the translating cowl cannot be deployed. If the blade fractures during use, it may no longer prevent the deployment of the translating cowl. This may allow for the unintentional deployment of the thrust reverser system.

Conventional tertiary lock systems detect a fracture in the blade using a sensor lever and proximity sensors. If there is a fracture in the blade, the sensor lever will not move when the blade is retracted. This will be detected by the proximity sensors and trigger an inspection of the tertiary lock system. Tertiary lock systems may use an electric motor with a rotary position sensor to control the retraction and extension of the blade.

It is desired to provide an improved tertiary lock system.

### Summary

According to a first aspect, there is provided a lock system for an aircraft thrust reverser comprising: a blade comprising a blade stop, a blade actuating member, a sensor, a controller and an electric motor. The blade is translatable along the blade actuating member between an extended locked position and a retracted unlocked position. The electric motor, the blade and the blade actuating member are arranged such that rotation of the electric motor translates the blade along the blade actuating member between the extended locked position and the retracted unlocked position. The blade stop is arranged to contact the end of the blade actuating member when the blade is in the retracted unlocked position. The blade and the blade actuating member are arranged such that the blade is capable of being retracted past the point where the blade stop contacts the end of the blade actuating member when the blade is fractured and translated in the direction of the retracted unlocked position from the extended locked position. The sensor is arranged to determine a position of the blade along the blade actuating member and to send a signal to the controller based on the position of the blade along the blade actuating member. The controller is arranged to determine when the signal from the sensor indicates that the blade has retracted past the point where the blade stop contacts the end of the blade actuating member.

The present disclosure thus provides a lock system for an aircraft thrust reverser that is configured to act on a movable component (e.g. a translating cowl) of the thrust reverser. Such a lock system may be described as a "tertiary" lock system. The thrust reverser may also comprise other lock systems that also prevent deployment of the thrust reverser (when these lock systems are locked). Two "primary" locks are typically coupled to the actuators of the thrust reverser. However, the thrust reverser may comprise any suitable and desired number of lock systems, such that the (e.g. "tertiary") lock system of the present disclosure may be the "primary", "secondary", "quaternary" or any other order of lock system, depending on the number of other lock systems in the thrust reverser.

The blade may also be translatable along the blade actuating member between a retracted unlocked position and an extended locked position. The blade may be linearly translatable along the blade actuating member. The blade and the blade actuating member may be arranged such that they share a common longitudinal axis. The blade and the blade actuating member may be arranged such that the blade is translated along the longitudinal axis.

The lock system may comprise a casing arranged to house the blade, the blade actuating member and the electric motor. The casing may comprise a casing aperture, wherein the blade, the blade actuating member and the casing are arranged such that the blade is translated along the blade actuating member through the casing aperture (as it is moved between the retracted unlocked position and the extended locked position). The casing aperture may be arranged such that the plane of the casing aperture is perpendicular to the longitudinal axis.

The blade may comprise a blade cavity arranged to receive the blade actuating member. The blade cavity may be defined within the blade along the longitudinal axis and/or in a direction facing the blade actuating member. The length of the blade cavity may be less than the length of the blade actuating member. The blade actuating member may be arranged to fill the blade cavity when the blade is in the retracted unlocked position.

The blade cavity may comprise a distal end, wherein the blade, blade cavity and distal end are arranged such that the distal end projects beyond the casing aperture when the blade is in the extended locked position.

The blade stop may comprise the distal end or the blade stop may comprise a screw retracted stop. The screw retracted stop may be connected to the distal end. The screw retracted stop, the blade cavity and the distal end may be arranged such that the screw retracted stop points along the longitudinal axis in the direction of the blade cavity from the distal end.

The electric motor, the blade and the blade actuating member may be arranged such that rotation of the electric motor translates the blade along the blade actuating member between the retracted unlocked position and the extended locked position.

The blade actuating member may comprise a blade actuating member extension, wherein the blade actuating member extension is connected to an end of the blade actuating member, and wherein the blade actuating member extension is arranged to contact the distal end of the blade cavity when the blade is in the retracted unlocked position. The blade actuating member extension may be arranged to point along the longitudinal axis towards the blade from the end of the blade actuating member.

The blade actuating member and/or the blade may be threaded. The blade actuating member may be a ball screw or any other suitable type of screw.

The blade actuating member and/or the blade may be threaded such that a rotation of the electric motor causes a rotation of the blade actuating member resulting in the screwing of the blade actuating member into the blade. The screwing of the blade actuating member into the blade may cause the translation of the blade from the extended locked position to the retracted unlocked position.

The blade actuating member and/or the blade may also be threaded such that a rotation of the electric motor causes a rotation of the blade actuating member resulting in the unscrewing of the blade actuating member out of the blade. The unscrewing of the blade actuating member out of the blade may cause the translation of the blade from the retracted unlocked position to the extended locked position.

Screwing or unscrewing may comprise a rotation of the blade actuating member about the longitudinal axis of the blade actuating member wherein screwing is such a rotation in one direction and unscrewing is such a rotation in the opposite direction.

The lock system may further comprise a biasing member arranged to bias the blade (e.g. along the longitudinal axis) either towards the retracted unlocked position from the extended locked position or towards the extended locked position from the retracted unlocked position. The biasing member may comprise one or more compression springs, a clutch or a power off brake.

The sensor may comprise a rotary position sensor, a linear position sensor and/or a load sensor. Preferably the sensor may comprise an absolute (e.g. a 360 degree) rotary position sensor. More preferably the sensor may comprise a magnetic encoder, a hall effect encoder or an RVDT or any other suitable sensor. The sensor may comprise a sensor array.

In examples where the sensor comprises an absolute (e.g. a 360 degree) rotary position sensor, the signal to the controller based on the position of the blade along the blade actuating member may be unique for each position of the blade along the blade actuating member. This may allow the position of the blade along the blade actuating member to be determined more precisely.

The rotary position sensor may determine the position of the blade by measuring the rotation of the motor. The rotary position sensor may determine that the blade is in the extended locked position by measuring the rotation of the motor and/or that the blade is in the retracted unlocked position by measuring the rotation of the motor. The load sensor may determine the position of the blade by registering a contact of the blade with the proximity sensor.

The load sensor, blade and blade actuating member may be arranged such that the load sensor will register contact of the blade with the load sensor when the blade has retracted in the direction of the retracted unlocked position past the point where the blade stop contacts the end of the blade actuating member.

The linear position sensor (e.g. a proximity sensor), blade and blade actuating member may be arranged such that the linear position sensor registers the position of the blade when the blade has retracted in the direction of the retracted unlocked position past the point where the blade stop contacts the end of the blade actuating member.

The lock system may comprise a second sensor for dual position feedback. This may improve redundancy. The second sensor may comprise the same type of sensor or a different type of sensor. For example, the lock system may comprise any suitable combination of a rotary position sensor, a linear position sensor and/or a load sensor with any suitable number of each sensor.

In examples where the lock system comprises a second sensor, the second sensor may be arranged to determine a position of the blade along the blade actuating member and to send a signal to the controller based on the position of the blade along the blade actuating member. The controller may then be arranged to determine when the signal from the sensor and/or the signal from the second sensor indicates that the blade has retracted past the point where the blade stop contacts the end of the blade actuating member. The controller may also be arranged to determine when the signal from the sensor and/or the signal from the second sensor indicates that the blade is in the extended locked position.

The controller may be arranged to trigger an inspection of the lock system upon a determination that the blade has retracted past the point where the blade stop contacts the end of the blade actuating member. The controller may also be arranged to send a signal to a further component of the system to trigger the lock system inspection.

The blade actuating member may be arranged such that the blade jams in place upon translating in the direction of the retracted unlocked position past the point where the blade stop contacts the end of the blade actuating member. A jam of the blade may comprise that the blade can no longer translate in any direction.

In examples where the blade actuating member is threaded, the blade actuating member may comprise a first thread groove and a second thread groove. The second thread groove may be tighter than the first thread groove. When the blade translates between the extended locked position and the retracted unlocked position and vice versa, the blade may contact the first thread groove. When the blade translates in the direction of the retracted unlocked position past the point where the blade stop contacts the end of the blade actuating member, the blade may contact the second thread groove. The blade may jam in place upon a contact with the second thread groove.

The controller may be arranged to determine when the signal from the sensor (and/or the second sensor) indicates that the blade is not translating when the electric motor attempts to translate the blade from the retracted unlocked position to the extended locked position. The controller may be arranged to trigger a lock system inspection upon a determination that the blade is not translating when the electric motor attempts to translate the blade from the retracted unlocked position to the extended locked position. The controller may also be arranged to send a signal to a further component of the system to trigger a lock system inspection upon a determination that the blade is not translating when the electric motor attempts to translate the blade from the retracted unlocked position to the extended locked position.

According to a second aspect, there is provided a method of operating a lock system comprising: providing a lock system as provided by the first aspect; translating the blade in the direction of the retracted unlocked position from the extended locked position; determining via the sensor a position of the blade along the blade actuating member; sending a signal to the controller from the sensor based on the position of the blade along the blade actuating member; and determining via the controller when the signal from the sensor indicates that the blade has retracted past the point where the blade stop contacts the end of the blade actuating member.

The method may comprise the step of triggering a lock system inspection upon a determination that the blade has retracted past the point where the blade stop contacts the end of the blade actuating member. The controller may send a signal to a further component of the system to trigger a lock system inspection upon a determination that the blade has retracted past the point where the blade stop contacts the end of the blade actuating member.

The method may comprise the step of triggering a lock system inspection upon a determination that the blade is not translating when the electric motor attempts to translate the blade from the retracted unlocked position to the extended locked position. The method may comprise the step of sending a signal to a further component of the system to trigger a lock system inspection upon a determination that the blade is not translating when the electric motor attempts to translate the blade from the retracted unlocked position to the extended locked position.

### Brief Description of the Figures

Various examples will now be described with reference to the accompanying drawings in which:
Figure 1a shows a block diagram of a lock system;
Figure 1b shows the lock system in an extended locked position;
Figure 1c shows the lock system in a retracted unlocked position;
Figure 2a shows a fractured lock system in the extended locked position;
Figure 2b shows the fractured lock system in the retracted unlocked position;
Figure 3 shows a lock system using a screw retracted stop;
Figure 4 shows a lock system using a blade actuating member extension;
Figure 5 shows a lock system using a power off brake; and
Figure 6 shows a flowchart of a method of operating a lock system.

### Detailed Description

A tertiary lock system is typically coupled to a translating cowl of a thrust reverser system of an aircraft. A tertiary lock may comprise a blade configured to be placed into an extended locked position to prevent the movement of a component such that the translating cowl of the thrust reverser system cannot be deployed. If the blade is fractured, the blade may no longer prevent the deployment of the translating cowl. This may allow for the unintentional deployment of the thrust reverser system which may be dangerous.

Examples of lock systems will now be described with reference to the figures.

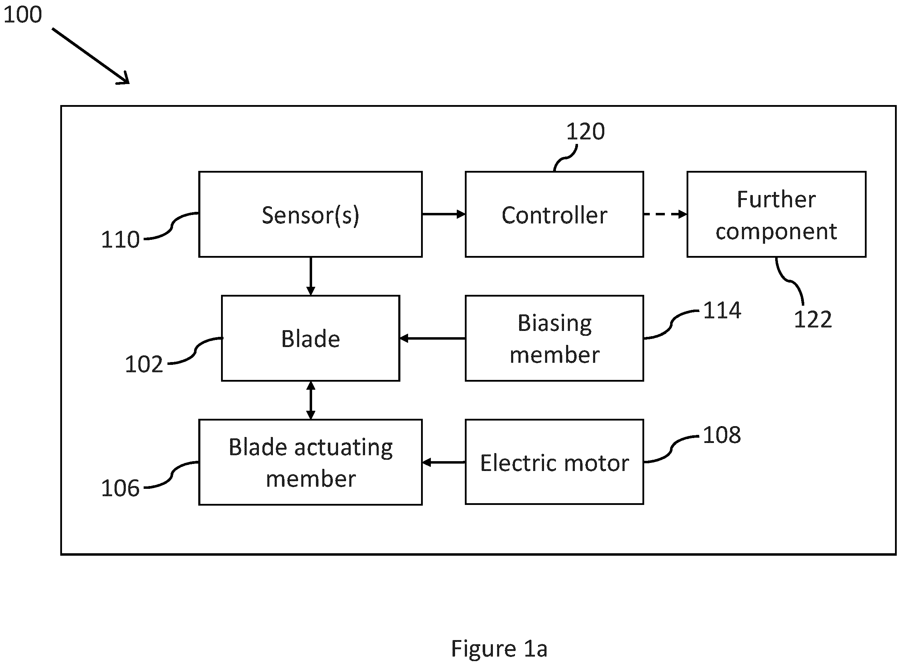

Figure 1a shows a block diagram of the operation of an example lock system 100. The lock system 100 comprises a blade 102, a blade actuating member 106, an electric motor 108, one or more sensors 110, a controller 120, a further component 122, and a biasing member 114.

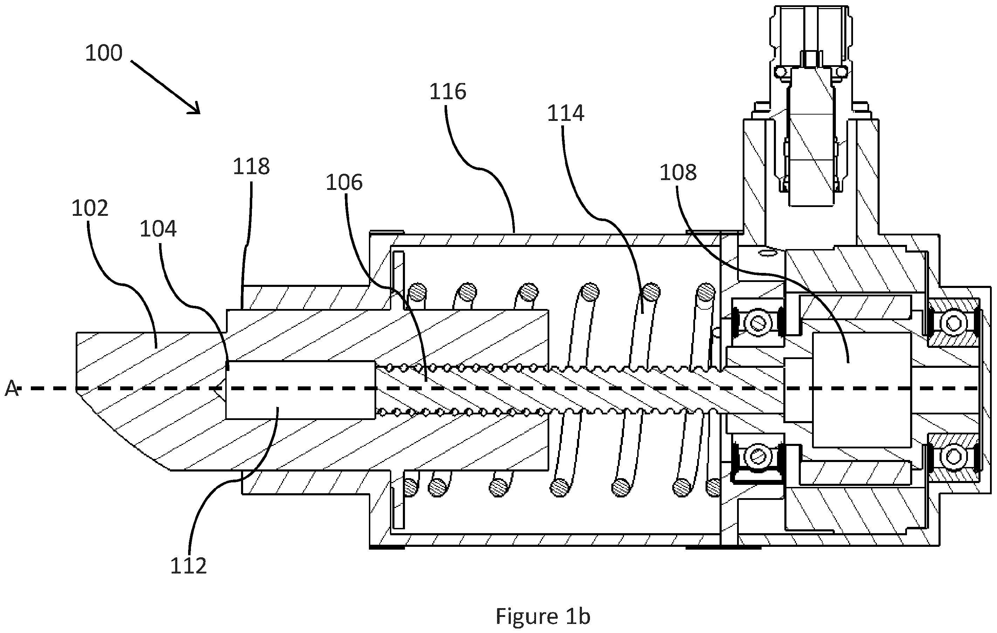

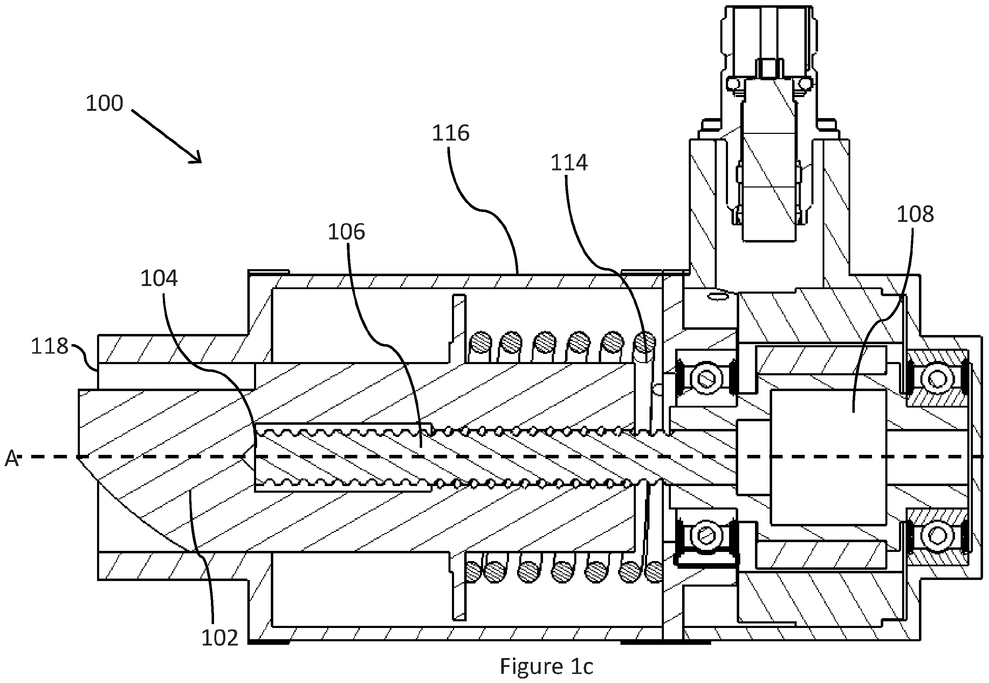

Figure 1b shows a schematic view of the example lock system 100 in the extended locked position. Figure 1c shows a schematic view of the example lock system 100 in the retracted unlocked position. The schematic views of the lock system 100 show the further features of a blade stop 104, a blade cavity 112, a casing 116, a casing aperture 118.

The blade 102, the blade actuating member 106 and the electric motor 108 are arranged such that rotation of the electric motor 108 translates the blade 102 along the blade actuating member 106 between the extended locked position shown in Figure 1b and the retracted unlocked position shown in Figure 1c.

The blade cavity 112 is arranged to receive the blade actuating member 106. The blade stop 104 comprises a distal end of the blade cavity 112 such that the blade stop 104 is arranged to contact the end of the blade actuating member 106 when the blade 102 is in the retracted unlocked position as shown in Figure 1c.

The sensor(s) 110 is arranged to determine a position of the blade 102 along the blade actuating member 106. In Figures 1b and 1c, the sensor(s) 110 comprises a rotary position sensor though the sensor(s) 110 may also or alternatively comprise a linear position sensor or load sensor. The sensor(s) 110 are also arranged to send a signal to the controller 120 based on the position of the blade 102 along the blade actuating member 106. The controller 120 is arranged to determine when the signal from the sensor(s) 110 indicates that the blade 102 has retracted past the point where the blade stop 104 contacts the end of the blade actuating member 106.

The controller 120 may be arranged to trigger an inspection of the lock system 100 upon a determination that the blade 102 has retracted past the point where the blade stop 104 contacts the end of the blade actuating member 106. The controller 120 may also be arranged to send a signal to a further component of the system 122 to trigger the lock system inspection.

The biasing member 114 is arranged to bias the blade 102 along the longitudinal axis A towards the extended locked position from the retracted unlocked position. In Figures 1b and 1c, the biasing member 114 comprises a compression spring.

The casing 116 comprises the casing aperture 118 which is arranged with the blade 102, the blade cavity 112 and the blade stop 104 such that the blade stop 104 projects beyond the casing aperture 118 when the blade 102 is in the extended locked position as shown in Figure 1b. The casing 116 is arranged to house the blade 102, the blade stop 104, the blade cavity 112, the blade actuating member 106, the electric motor 104, and the biasing member 114.

The normal operation of the lock system 100 will now be explained with continued reference to Figures 1a, 1b and 1c.

The blade 102, the blade actuating member 106 and the electric motor 108 are arranged inside the casing 116 such that the rotation of the electric motor 108 translates the blade 102 along the blade actuating member 106. The rotation of the electric motor 108 may translate the blade 102 in the direction of the retracted unlocked position from the extended locked position or vice versa. The electric motor 108 may be arranged such that a rotation of the electric motor 108 in one direction may translate the blade 102 in the direction of the retracted unlocked position from the extended locked position and a rotation of the electric motor 108 in the opposite direction may translate the blade 102 in the direction of the extended locked position from the retracted unlocked position.

The biasing member 114 acts such that it biases the blade 102 along the longitudinal axis A towards the extended locked position from the retracted unlocked position. This may allow the blade 102 to be placed in the extended locked position in the event that the electric motor 108 is inoperable. In Figures 1b and 1c, the biasing member 114 comprises a compression spring 114.

The rotation of the electric motor 108 is monitored by a sensor(s) 110. The sensor(s) 110 may comprise a rotary position sensor, such as in Figures 1b and 1c. In some examples, the sensor(s) 110 may comprise two or more of the same type of sensor to provide redundancy. In some examples, the sensor(s) 110 may comprise multiple different types of sensors to provide redundancy.

Through the monitoring of the rotation of the electric motor 108, the sensor(s) 110 also monitors the position of the blade 102 along the blade actuating member 106. The sensor(s) 110 sends a signal to a controller 120 based on the position of the blade 102 along the blade actuating member 106.

In some examples, the sensor(s) 110 may comprise a linear position sensor or load sensor arranged to monitor the retracted unlocked position of the blade 102 along the blade actuating member 106. The linear position sensor or load sensor may detect when the blade 102 has retracted past the point where the blade stop 104 would usually contact the end of the blade actuating member 106 and send a signal to the controller 120.When the blade 102 is translated into the retracted unlocked position, the blade stop 104 contacts the end of the blade actuating member 106 such that the blade 102 is stopped by the end of the blade actuating member 106. In this position, the lock system 100 is unlocked such that the thrust reverser system may deploy.

In this example, the blade stop 104 is a distal end 104 of the blade cavity 112. In Figures 1b and 1c, the blade 102, blade cavity 112 and distal end 104 are arranged such that the distal end 104 projects beyond the casing aperture 118 when the blade 102 is in the extended locked position. The blade cavity 112 may also extend for substantially the length of the blade 102 or any suitable distance along the length of the blade 102.

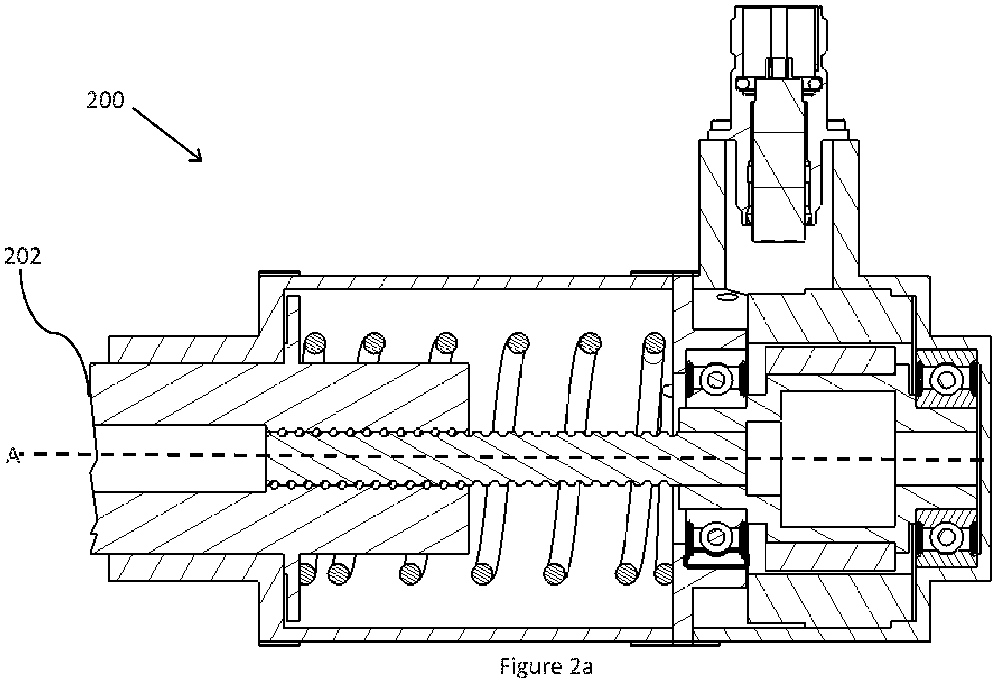

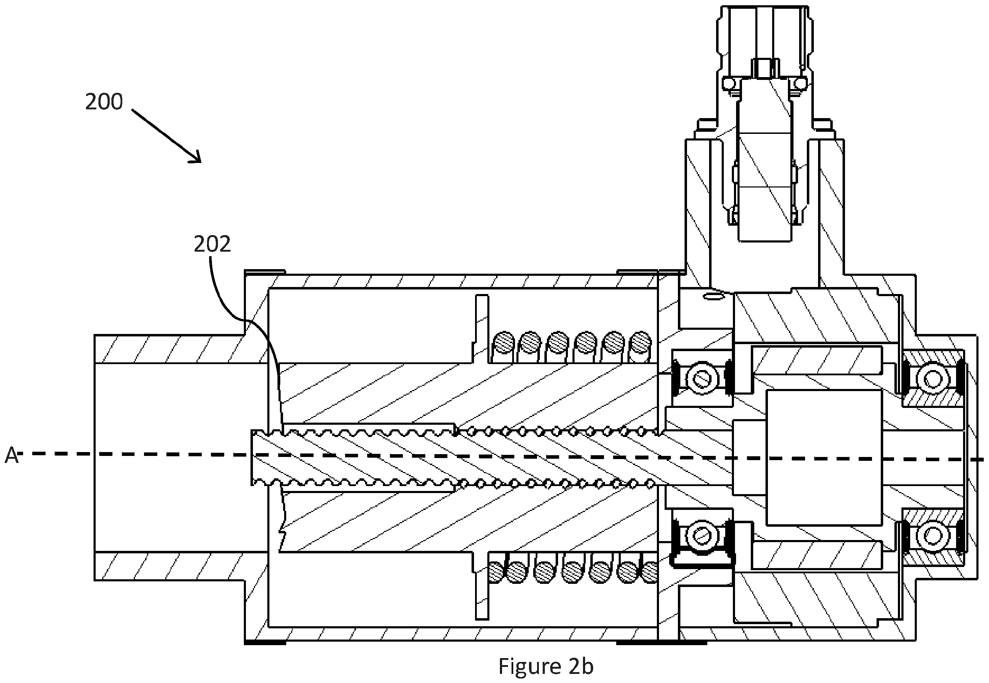

Figure 2a shows a fractured lock system 200 in the extended locked position. Figure 2b shows the fractured lock system 200 in the retracted unlocked position. The operation of the fractured lock system 200 will now be explained with reference to Figures 2a and 2b.

The features of the fractured lock system 200 are as in Figures 1a-c except the blade 102 now has a fracture 202 across the distal end of the blade 102. In the example provided by Figures 2a and 2b, the blade 102 has fractured at the weakest point along the blade's length. Because of this, the blade stop is no longer present.

When the electric motor 108 rotates to translate the blade 102 from the extended locked position to the retracted unlocked position, the blade 102 will overrun the end of the blade actuating member 106. This overrun will be detected by the sensor(s) 110. The controller 120 is arranged to determine when the signal from the sensor(s) 110 indicates that the blade 102 has retracted past the point where the blade stop 104 would usually contact the end of the blade actuating member 106. Upon this determination, the controller will trigger a lock system inspection.

In an example using a linear position sensor or load sensor, the linear position sensor or load sensor will detect that the blade 102 has retracted past the point where the blade stop 104 would usually contact the end of the blade actuating member 106 and then send a signal to the controller 120. The controller 120 will then make the same determination that the blade 102 has overrun and trigger a lock system inspection.

The controller 120 may not have to directly trigger a lock system inspection. Instead the controller 120 may send a signal to a further component 122 of the system (e.g. a warning light or a display screen) to trigger the lock system inspection. In some examples, the further component 122 may comprise the controller 120.

When the blade 102 has overrun the end of the blade actuating member 106, the blade actuating member 106 may be arranged to jam the blade 102 in place such that the blade 102 can no longer be translated along the blade actuating member 106. When the blade actuating member 106 is threaded, this may be achieved by using a tighter screw thread for the portion of the screw corresponding to the overrun section of the blade actuating member 106. This allows a further determination that the blade 102 has overrun.

In examples where the blade 102 jams in place once it has overrun the end of the blade actuating member 106, the controller 120 may be arranged to determine that the blade 102 is not moving despite rotation of the electric motor 108. Upon this determination, the controller 120 may be arranged to trigger a lock system inspection or to send a signal to a further component 122 to trigger a lock system inspection.

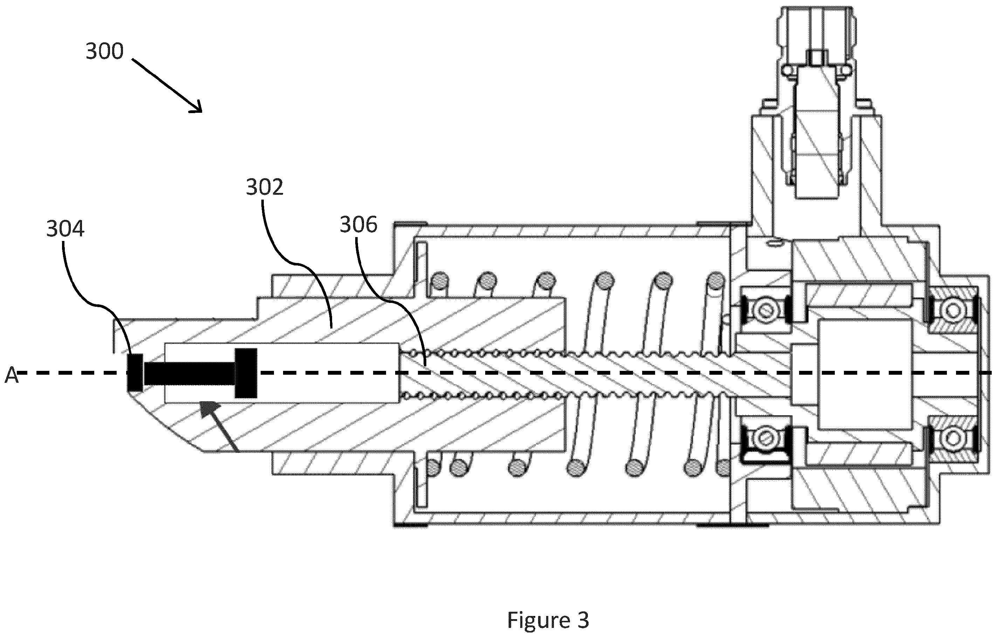

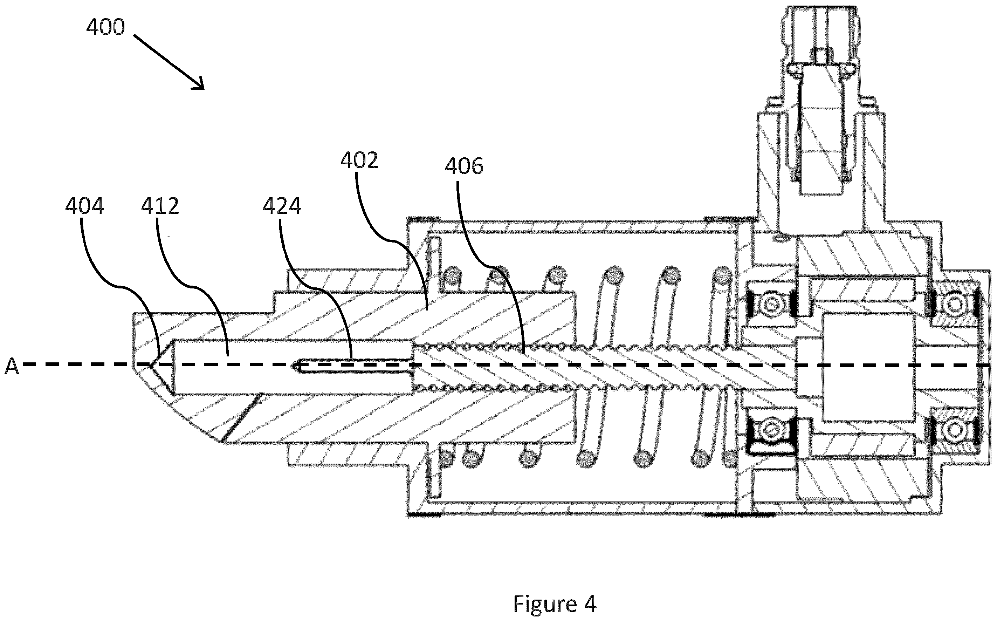

Figures 3 and 4 show lock systems 300, 400 for detecting fractures at any point along the blade 302, 402. The lock system 300 in Figure 3 uses a screw retracted stop 304 attached to the end of the blade 302 as a blade stop. The lock system 400 in Figure 4 uses an extended blade cavity 412 such that the blade stop 404 is moved towards the end of the blade 402 and a blade actuating member extension 424.

The screw retracted stop 304 and the blade actuating member extension 424 are arranged such that the retracted unlocked position of the blade 302, 402 is the same as in Figure 1b. In this way, no further alterations of the lock system 300, 400 are required to provide the benefits of detecting a fracture at any point along the blade 302, 402.

By using a screw retracted stop 304 or by extending the blade cavity 412 along substantially the length of the blade 302, 402, a fracture may be detectable at any point along the length of the blade 302, 402. A fracture at any point along the length of the blade 302, 402 may remove the blade stop 304, 404 and result in an overrun of the blade 302, 402 along the blade actuating member 306, 406.

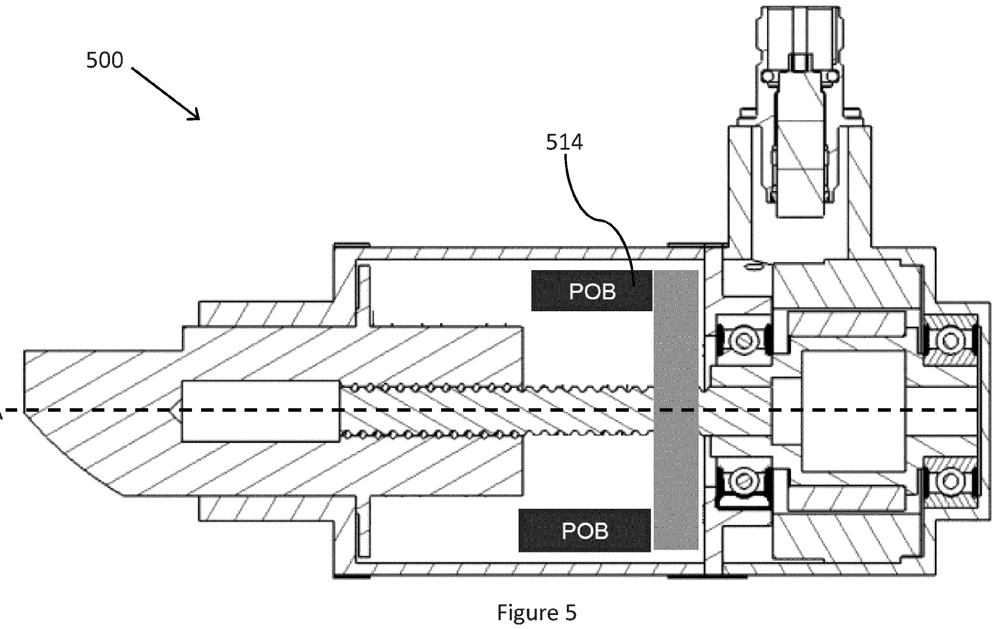

Figure 5 shows a lock system arrangement. The features of Figure 5 are substantially the same as in Figures 1b and 1c with the exception that the biasing member is a power off brake 514 instead of a compression spring. The biasing members shown in the schematic views are examples only. The biasing member 114 may comprise any suitable method of biasing such as one or more compression spring(s), a clutch or a power off brake 514.

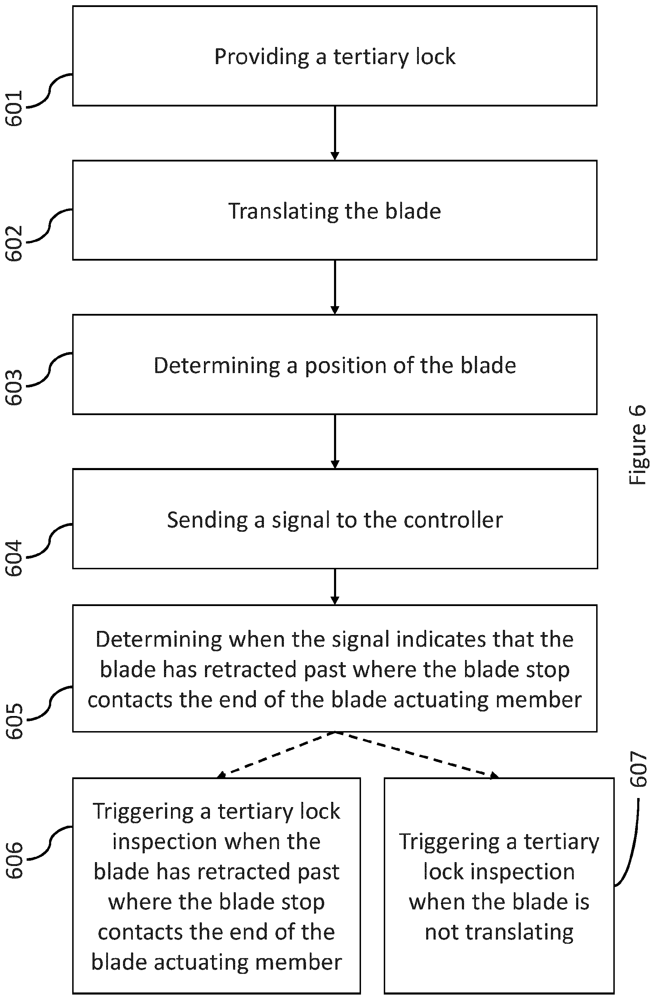

Figure 6 shows a method of operating a lock system. Step 601 comprises providing a lock system. Step 602 comprises translating the blade in the direction of the retracted unlocked position from the extended locked position. Step 603 comprises determining via the sensor a position of the blade along the blade actuating member. Step 604 comprises sending a signal to the controller from the sensor based on the position of the blade along the blade actuating member. Step 605 comprises determining via the controller when the signal from the sensor indicates that the blade has retracted past the point where the blade stop contacts the end of the blade actuating member.

The method may also comprise further steps 606 and 607. Either one or both of steps 606 and 607 may occur after step 605.

Step 606 comprises triggering a lock system inspection upon a determination that the blade has retracted past the point where the blade stop contacts the end of the blade actuating member and/or sending a signal to a further component of the system to trigger a lock system inspection upon a determination that the blade has retracted past the point where the blade stop contacts the end of the blade actuating member.

Step 607 comprises triggering a lock system inspection upon a determination that the blade is not translating when the electric motor attempts to translate the blade from the retracted unlocked position to the extended locked position and/or sending a signal to a further component of the system to trigger a lock system inspection upon a determination that the blade is not translating when the electric motor attempts to translate the blade from the retracted unlocked position to the extended locked position.

The present disclosure may help to provide a smaller and lighter lock system than in traditional applications. In the present disclosure, the blade and the blade actuating member are arranged such that the blade is capable of being retracted past the point where the blade stop contacts the end of the blade actuating member when the blade is fractured and translated in the direction of the retracted unlocked position from the extended locked position. The sensor is also arranged to determine a position of the blade along the blade actuating member and send a signal to the controller based on the position of the blade along the blade actuating member. The controller is arranged to determine when the signal from the sensor indicates that the blade has retracted past the point where the blade stop contacts the end of the blade actuating member. The arrangement of the present disclosure may allow a fracture of the blade to be detected and for the extended locked blade position to be monitored using fewer sensors in a simpler arrangement than in conventional applications. As fewer sensors are needed, the weight and size of the lock system may be reduced.

## Claims

1. A lock system for an aircraft thrust reverser (100; 200; 300; 400; 500), comprising:
a blade (102; 302; 402) comprising a blade stop (104; 404);
a blade actuating member (106; 306; 406);
wherein the blade (102; 302; 402) is translatable along the blade actuating member (106; 306; 406) between an extended locked position and a retracted unlocked position; and
an electric motor (108);
wherein the electric motor (108), the blade (102; 302; 402) and the blade actuating member (106; 306; 406) are arranged such that rotation of the electric motor (108) translates the blade (102; 302; 402) along the blade actuating member (106; 306; 406) between the extended locked position and the retracted unlocked position;
wherein the blade stop (104; 404) is arranged to contact the end of the blade actuating member (106; 306; 406) when the blade (102; 302; 402) is in the retracted unlocked position;
wherein the blade (102; 302; 402) and the blade actuating member (106; 306; 406) are arranged such that the blade (102; 302; 402) is capable of being retracted past the point where the blade stop (104; 404) contacts the end of the blade actuating member (106; 306; 406) when the blade (102; 302; 402) is fractured and translated in the direction of the retracted unlocked position from the extended locked position;
wherein the lock system (100; 200; 300; 400; 500) further comprises:
a sensor (110) arranged to determine a position of the blade (102; 302; 402) along the blade actuating member (106; 306; 406); and
a controller (120);
wherein the sensor (110) is arranged to send a signal to the controller (120) based on the position of the blade (102; 302; 402) along the blade actuating member (106; 306; 406); and
wherein the controller (120) is arranged to determine when the signal from the sensor (110) indicates that the blade (102; 302; 402) has retracted past the point where the blade stop (104; 404) contacts the end of the blade actuating member (106; 306; 406).

2. The lock system (100; 200; 300; 400; 500) as claimed in claim 1, wherein the blade (102; 302; 402) comprises a blade cavity (112; 412) arranged to receive the blade actuating member (106; 306; 406), and wherein the blade actuating member (106; 306; 406) is arranged to fill the blade cavity (112; 412) when the blade (102; 302; 402) is in the retracted unlocked position.

3. The lock system (100; 200; 300; 400; 500) as claimed in claim 2, wherein the length of the blade cavity (112; 412) is less than the length of the blade actuating member (106; 306; 406).

4. The lock system (100; 200; 300; 400; 500) as claimed in claims 2 or 3, wherein the blade cavity (112; 412) comprises a distal end;
wherein the lock system (100; 200; 300; 400; 500) comprises a casing (116) comprising a casing aperture (118);
wherein the casing (116) is arranged to house the blade (102; 302; 402), the blade actuating member (106; 306; 406) and the electric motor (108); and
wherein the blade (102; 302; 402), the blade cavity (112; 412) and the distal end are arranged such that the distal end projects beyond the casing aperture (118) when the blade (102; 302; 402) is in the extended locked position.

5. The lock system (100; 200; 300; 400; 500) as claimed in claim 4, wherein the blade stop (104; 404) comprises the distal end and wherein the blade actuating member (106; 306; 406) comprises a blade actuating member extension (424) arranged to contact the distal end when the blade (102; 302; 402) is in the retracted unlocked position.

6. The lock system (100; 200; 300; 400; 500) as claimed in any of claims 1 to 4, wherein the blade stop (104; 404) comprises a screw retracted stop (304).

7. The lock system (100; 200; 300; 400; 500) as claimed in any preceding claim, wherein the controller (120) is arranged to trigger a lock system inspection upon a determination that the blade (102; 302; 402) has retracted past the point where the blade stop (104; 404) contacts the end of the blade actuating member (106; 306; 406).

8. The lock system (100; 200; 300; 400; 500) as claimed in any of claims 1 to 6, wherein the controller (120) is arranged to send a signal to a further component of the system (122) to trigger a lock system inspection upon a determination that the blade (102; 302; 402) has retracted past the point where the blade stop (104; 404) contacts the end of the blade actuating member (106; 306; 406).

9. The lock system (100; 200; 300; 400; 500) as claimed in any preceding claim, wherein the blade actuating member (106; 306; 406) is arranged such that the blade (102; 302; 402) jams in place upon translating in the direction of the retracted unlocked position past the point where the blade stop (104; 404) contacts the end of the blade actuating member (106; 306; 406).

10. The lock system (100; 200; 300; 400; 500) as claimed in claim 9, wherein the blade actuating member (106; 306; 406) comprises a thread groove and wherein the blade (102; 302; 402) is arranged to jam in place upon a contact with the thread groove.

11. The lock system (100; 200; 300; 400; 500) as claimed in any preceding claim, wherein the lock system (100; 200; 300; 400; 500) comprises a biasing member (114) arranged to bias the blade (102; 302; 402) either towards the retracted unlocked position from the extended locked position or towards the extended locked position from the retracted unlocked position.

12. The lock system (100; 200; 300; 400; 500) as claimed in claim 11, wherein the biasing member (114) comprises a compression spring, a clutch or a power off brake (514).

13. The lock system (100; 200; 300; 400; 500) as claimed in any preceding claim, wherein the sensor (110) comprises a rotary position sensor or a linear position sensor or a load sensor.

14. The lock system (100; 200; 300; 400; 500) as claimed in claim 13, wherein the sensor (110) comprises a rotary position sensor and wherein the rotary position sensor comprises a magnetic encoder, a hall effect encoder or an RVDT.

15. A method of operating a lock system (100; 200; 300; 400; 500) comprising:
providing the lock system (100; 200; 300; 400; 500) as claimed in any preceding claim;
translating the blade (102; 302; 402) in the direction of the retracted unlocked position from the extended locked position;
determining via the sensor (110) a position of the blade (102; 302; 402) along the blade actuating member (106; 306; 406);
sending a signal to the controller (120) from the sensor (110) based on the position of the blade (102; 302; 402) along the blade actuating member (106; 306; 406); and
determining via the controller (120) when the signal from the sensor (110) indicates that the blade (102; 302; 402) has retracted past the point where the blade stop (104; 404) contacts the end of the blade actuating member (106; 306; 406).
